# EUROPEAN PATENT APPLICATION

(11) **EP 2 727 662 A1**
(43) Date of publication of application: **07.05.2014**
(21) Application number: 13190342.9
(22) Date of filing: 25.10.2013
(51) Int. Cl.: B09C 1/02, B09C 1/10, A62D 3/00, A62D 3/02, B09C 1/00, A62D 101/04

(54) **Process for reducing levels of contamination of soils polluted by DDT, DDE, DDD and/or isomers thereof**

(30) Priority: 26.10.2012 IT MI20121827
(71) Applicant: Biodermol Ambiente S.r.l., 38015 Lavis (TN) (IT)
(72) Inventor: Baruchelli, Mauro, 38015 Lavis (Trento) (IT); Baruchelli, Dario, 38015 Lavis (Trento) (IT)
(74) Representative: Ponchiroli, Simone

(57) **Abstract**

This invention relates to a process for reducing the levels of contamination of soils polluted by DDT, DDE, DDD and/or their isomers which comprises the steps of:
(i) excavating the polluted soil;
(ii) sieving the excavated soil to separate out a first part with particle size measurement less than a predetermined threshold value;
(iii) adding to a predetermined quantity of the first part of sieved polluted soil a first aqueous solution containing one or more enzymes in such a way as to obtain a solid - liquid mass;
(iv) stirring the solid - liquid mass for a predetermined time so that said one or more enzymes catalyse the partial or total degradation of said pollutant; and
(v) separating the solid - liquid mass into a residual aqueous suspension and into a solid part.

## Description

This invention relates to a process for reducing the levels of contamination of soils polluted by DDT, DDE, DDD and/or their isomers.

The treatment and decontamination of matrices containing substances harmful to human health is considerably and increasingly important in the most diverse sectors.

Soil contamination may be caused either by naturally occurring substances, for example soil contamination by the by-products of oil (hydrocarbons), or by synthetic substances, which do not occur naturally in the environment, one example, important in its intensity and extension, being soils polluted by DDT-based insecticides.

The biological degradation of soils polluted by synthetic substances which do not occur naturally in the environment is a process which is very complex and difficult to achieve, since these synthetic substances are difficult to attack. An example of this is the biological decontamination of soils polluted by synthetic organic insecticides, such as DDT. In fact, for these polluted soils there is a strong demand for decontamination to be carried out preferably with environmentally friendly processes.

The discovery in 1939 of the insecticidal properties of 4,4' DDT was an important advantage for mankind, DDT proving extremely effective in the fight against anopheles mosquitoes responsible for the spread of malaria in developing countries. Moreover, it was effective in controlling other parasites which live on fruit, vegetables and cereal crops.

However, at the start of the '60s the harmful effects of DDT-based pesticides were also highlighted. In fact, during the '70s the US Environmental Protection Agency (USEPA) banned the use of DDT in the USA and, subsequently, the ban was extended to other countries (there are still some exceptions to the ban for those countries in which use is allowed for malaria vector control in areas where the disease is endemic).

DDT is included in the Stockholm Convention on Persistent Organic Pollutants (POP) and in the POP (CLRTAP-POP) protocol in the Convention on Long-Range Transboundary Air Pollution of the United Nations Economic Commission for Europe (UNECE). DDT, its isomers and its primary metabolites, that is to say, DDE and DDD, are manufactured chemicals and are not known to occur naturally in the environment (WHO 1979). Historically, DDT, DDE, DDD and their isomers were present in the soil due to their direct or indirect release following production, formulation, storage and disposal.

When deposited on soil DDT, DDE, DDD and their isomers are strongly absorbed and may volatilize. Moreover, they may photodegrade (if they remain in soil surface layers) or biodegrade. In particular, under aerobic conditions DDT biodegrades primarily to DDE, whilst under anaerobic conditions it biodegrades to DDD. However, even these metabolites (that is to say, DDE and DDD) are highly toxic and must absolutely be removed from the soil. However, the removal of these substances is very difficult to achieve, since they are chemically very stable molecules, insoluble and therefore almost unassailable.

In order to eliminate or render harmless the substances which pollute a soil, a distinction is made between various decontamination technologies which, depending on the main mechanism on which they are based, may be termed: chemical, physical, thermal or biological technologies.

Chemical treatments, using suitable reactions of the oxidation - reduction type (redox reactions), transform pollutants into less toxic substances. Physical treatments (for example extraction using steam) are based on systems capable of separating contaminants from the matrix and concentrating them. The concentrated contaminants are then subjected to a final treatment (for example extraction with solvent).

Thermal treatments aim both to destroy the pollutant (pyrolysis) and to immobilise it by fusion of the medium which contains it.

Biological treatments usually use micro-organisms which consume the contaminants, breaking them down and converting them into carbon dioxide and water.

Decontamination processes may be applied directly at the site of the contamination, that is to say, in situ, or after excavating the contaminated soil, that is to say, ex situ. In turn, ex situ treatments are defined on site if carried out at the site of the excavation, or off site if remote plants must be used to implement them.

Chemical treatments have the disadvantage linked to the use of aggressive synthetic chemicals to decontaminate the soil, which may in turn be very dangerous for the environment.

Secondly, chemical, physical and thermal treatments have polluting waste products, which therefore in turn require special devices to avoid further pollution.

Moreover, in most applications these decontamination methods involve the contaminated soil having to be excavated and transported to a remote treatment site, consequently increasing the costs and time needed for reducing the levels of contamination.

Concerning specifically DDT, DDE, DDD and/or their isomers, at present several "bioremediation" methods are being tested, which involve adding to the soil micro-organisms able to degrade such substances, but which have so far not had any really significant results.

Finally, generally speaking, the duration of the methods described is relatively long.

The limits of the above-mentioned treatments mean that the practice of dumping polluted soil, which is not an effective solution to pollution but instead just moves it from one place to another, is still very widespread. From the above, it is apparent that there is still a pressing need to succeed in reducing the levels of contamination of soils polluted by DDT, DDE, DDD and/or their isomers, without having any further impact on the environment, therefore without producing other pollutants, in a short period of time and with a low cost.

Also known from patent EP 2 138 245 is a process for the biological decontamination of soils polluted by hydrocarbons, dioxin or phenols, which involves excavation of the soil to be treated and mixing it with an aqueous solution containing a series of enzymes for a predetermined period of time. However, that patent does not involve nor suggest the application of the method to substances other than those specifically indicated. In particular, there are no indications which lead one to believe that said method is useful for reducing the levels of contamination of soils polluted by DDT, DDE, DDD and/or their isomers.

The Applicant has found a solution to the above-mentioned technical problem with a process for reducing the levels of contamination of soils polluted by DDT, DDE, DDD and/or their isomers as described in the appended independent claims.

The preferred aspects of the process for reducing the levels of contamination according to this invention are specified in the appended dependent claims.

The method for reducing the levels of contamination of soils polluted by DDT, DDE, DDD and/or their isomers according to this invention is particularly advantageous because it does not require the use of aggressive synthetic chemicals, which are themselves dangerous for the environment and, moreover, it does not produce polluting waste.

A further advantage of the method for reducing the levels of contamination of soils polluted by DDT, DDE, DDD and/or their isomers according to this invention is that the process can be carried out directly on the spot (therefore, it can be an on site process) by excavating the polluted soil and treating it in situ.

Finally, the duration of the process for reducing the levels of contamination of soils polluted by DDT, DDE, DDD and/or their isomers according to this invention is relatively short, but at the same time it allows a considerable reduction of the levels of contamination. In fact, the process for reducing the levels of contamination of soils polluted by DDT, DDE, DDD and/or their isomers according to this invention advantageously allows an optimum reduction of the pollutant in relatively short times (a matter of hours). In particular, the Applicant has found that by applying the method according to the invention in a short period of time it is possible to reduce the quantities of DDT, DDE, DDD and/or their isomers in polluted soils by at least 35% compared with the initial level of pollutants.

At present, biological processes for reducing the levels of contamination of soils polluted by DDT, DDE, DDD and/or their isomers (bioremediation processes still at the experimental stage) require times amounting to months (around 45 - 50 days) to arrive at the pollutant reduction values which, in contrast, the process for reducing levels of contamination according to this invention, allows to be achieved in just a few hours. Therefore, the process for reducing levels of contamination of soils polluted by DDT, DDE, DDD and/or their isomers according to this invention has proved very reliable and inexpensive, since the costs for implementing it are low.

The features and advantages of the method for reducing the levels of contamination of soils polluted by DDT, DDE, DDD and/or their isomers according to this invention are more apparent from the detailed description which follows, with reference to the accompanying drawings, in which:
- Figure 1 is a diagram of a plant suitable for implementing the process for reducing the levels of contamination of soils polluted by DDT, DDE, DDD and/or their isomers according to this invention;
- Figure 2 is a block diagram of the operation of the plant of Figure 1.

For the purposes of this invention DDT means the compound 4,4' dichlorodiphenyltrichloroethane, with IUPAC name 1,1,1 -trichloro-2,2-bis(p-chlorophenyl)ethane; DDE is the compound 4,4' dichlorodiphenyldichloroethylene, with IUPAC name 1,1-dichloro-2.2-bis(p-chlorophenyl)ethylene, DDD is the compound 4,4' dichlorodiphenyldichloroethane, with IUPAC name 1,1-dichloro-2,2-bis(p-chlorophenyl)ethane.

The process for reducing the levels of contamination of a soil polluted by at least one pollutant amongst DDT, DDE, DDD and/or their isomers, comprises the steps of:
(i) excavating a soil polluted by at least one pollutant amongst DDT, DDE, DDD and/or their isomers (excavation step);
(ii) sieving said excavated polluted soil to separate out a first part with particle size measurement less than a predetermined threshold value, from a second part with particle size measurement greater than said predetermined threshold value. The predetermined threshold value being less than or equal to 100 mm (sieving step);
(iii) adding to a predetermined quantity of the first part of sieved polluted soil, preferably in a reactor, a first aqueous solution containing one or more enzymes in such a way as to obtain a solid - liquid mass;
(iv) stirring the solid - liquid mass for a predetermined time so that said one or more enzymes catalyse the partial or total degradation of said at least one pollutant by means of the micro-organisms present in the polluted soil (stirring step);
(v) separating the solid - liquid mass into a residual aqueous suspension and into a solid part (separation step).

In a preferred embodiment of the invention, said excavation step further comprises step of homogenisation of the soil to be treated. This is done so as to overcome the problem of any presence of high concentrations of contaminants and high concentrations of clay. Preferably, said step of homogenisation of the soil is carried out by mixing the soil.

After the excavation step, the process for reducing the levels of contamination of soils polluted by DDT, DDE, DDD and/or their isomers according to this invention comprises a step of sieving the soil, preferably dry sieving.

Said sieving step is carried out to separate the part with particle size measurement less than a predetermined threshold value from the part with particle size measurement greater than said predetermined threshold value. For the purposes of this invention, the predetermined threshold value is preferably less than or equal to 100 mm, more preferably less than or equal to 30 mm, even more preferably less than or equal to 10 or to 4 mm. The threshold value most preferred for the purposes of this invention is less than or equal to 2 mm.

That means that, preferably, only the polluted soil with particle size measurement less than or equal to said threshold value will be subjected to the process for reducing the levels of contamination according to this invention.

In general, the predetermined threshold value depends on the soil particle size measurement curve. In particular, the predetermined threshold value will be selected towards the lower limits of the range when the particle size measurement curve does not have high percentages of clay, and towards the higher limits of the range if there is a high level of clay present.

Said sieving step is carried out because the part of the soil with the greater particle size measurement (normally consisting of stones) is not usually polluted and so can be stored and excluded from the treatment, since it is already suitable to be put back on the ground as soil that is not polluted. Therefore, the preliminary sieving step reduces the quantity of soil to be treated, with a considerable advantage in economic terms.

According to a preferred embodiment of the invention, the process for reducing the levels of contamination may comprise in addition to the step of sieving the polluted soil, a step of reducing the particle size measurement of the polluted soil, to allow it to be treated more effectively. Said step of reducing the particle size measurement is preferably performed by grinding the soil or by other similar systems designed for that purpose.

Said step of reducing the particle size measurement of the polluted soil may occur either before or after the sieving of the polluted soil.

The process for reducing the levels of contamination according to this invention comprises, after said sieving step, a step of adding to a predetermined quantity of sieved polluted soil a first aqueous solution containing one or more enzymes. This step allows a solid - liquid mass to be obtained and its aim is to accelerate the degradation of the pollutants by the micro-organisms. Said stirring step is preferably carried out in a reactor which preferably comprises an inner stirrer. The polluted soil is placed in the reactor, the soil already naturally comprising the micro-organisms, with electron acceptors (mainly oxygen) and/or surfactants.

The function of the enzymes in the first aqueous solution is to accelerate the microbial degradation of the pollutants, that is to say, the degradation which occurs thanks to the action of the micro-organisms and the electron acceptors already present in the soil. In this way, the pollutant is partly or completely detached thanks to the mechanical action of the first aqueous solution on the soil.

According to a preferred embodiment of the invention, said one or more enzymes are preferably selected in the group consisting of: hydrolase, protease, lipase, amylase, cellulase, lactase, laccase, carboxylase, catalase and phospholipase.

Preferably, said one or more enzymes comprise at least one enzyme derived from at least one bacteria selected amongst: at least one bacteria of the Bacilli family, preferably Bacillus licheniformis and/or Bacillus subtilis, at least one Pseudomonas bacteria and the bacteria Thermus thermophilus; and/or at least one enzyme derived from at least one fungus selected amongst: at least one fungus of the Thermomyces family, preferably Thermomyces lanuginosus, Aspergillus Oryzae and Aspergillus niger; and/or at least one enzyme contained in pancreatin; and/or laccase; and/or carboxylase; and/or combinations of them.

In a first embodiment of this invention said one or more enzymes comprise laccase, carboxylase, an enzyme derived from each of the following bacteria/fungi: Bacillus subtilis, Bacillus subtilis CoA, Thermus thermophilus, Aspergillus oryzae and Aspergillus niger, as well as at least one enzyme contained in pancreatin.

In a second preferred embodiment of this invention the one first aqueous solution comprises the following combination of enzymes: an enzyme obtained from pancreatin, an enzyme obtained from Bacillus licheniformis, an enzyme obtained from Bacillus subtilis, an enzyme obtained from Thermomyces lanuginosus and an enzyme obtained from Aspergillus Oryzae.

Said first aqueous solution preferably also contains a pH correction agent, preferably a weak acid such as acetic acid.

It is preferably added in a quantity which allows the achievement of a pH value suitable for allowing enzymatic reactions. The pH preferably varies between 3 and 6. Said stirring step is carried out for a predetermined time. The duration of said stirring step allows said one or more enzymes to carry out their catalytic action for the breakdown of the pollutants by means of the micro-organisms present in the polluted soil. In fact, stirring is intended to improve the solid - liquid contact and the water creates improved conditions for the micro-organisms to attack the pollutant. Therefore, this step improves and speeds up degradation of the pollutant by the micro-organisms.

In a preferred embodiment of the invention, said stirring step is carried out for a time which may vary from 3 to 12 hours, preferably from 4 to 8 hours, more preferably from 5 to 7 hours. In the most preferred embodiment said stirring step is carried out for at least 6 hours, preferably for 6 hours.

In a further preferred embodiment of the invention, said stirring step is carried out at an ambient temperature, preferably varying between 15 and 30°C.

The ratio of the quantity of said first aqueous solution to the quantity of said polluted soil, the concentration of said one or more enzymes in the first aqueous solution and the duration of the step of stirring the solid - liquid mass depend on various parameters. In particular, they depend on the polluted soil particle size measurement curve, and/or the extent of the pollution (quantity of pollutant) and/or the type of pollution.

Therefore, the ratio of the quantity of said first aqueous solution to the quantity of said polluted soil, the concentration of said one or more enzymes and the duration of the stirring step must be defined on a case by case basis according to requirements, by means of preliminary set-up tests on a pilot plant.

The presence of the aqueous medium allows two basic actions to be carried out:
(1) it improves the performance of the micro-organisms because the effectiveness of their action is proportional to the water activity (aw) value of the medium in which they are found (solid - liquid mass);
(2) it allows the enzymes to carry out their catalytic action since it is easier for them to make contact with the components of the reaction to be catalysed compared with what would happen if there was just contaminated soil.

Preferably the ratio by weight of the polluted soil to the first aqueous solution is within the range between 1:1 (equal weight) and 1:2 (quantity of polluted soil is half the quantity of the first aqueous solution). Said first aqueous solution contains a quantity of enzymes which varies preferably from 1 to 5%, preferably from 1 to 2% relative to the weight of the soil. Moreover, it has been noticed that the presence of surfactants (for example produced by the micro-organisms present in the soil) promotes the formation of pollutant
- water emulsions. The emulsified pollutants acquire hydrophilic properties such that they can pass through the micro-organism cell wall. When they manage to penetrate the micro-organism, the pollutants are gradually broken down by means of a series of chemical reactions, for example oxidation reactions.

In order to take place, each of these reactions needs an electron acceptor, usually oxygen, and a catalyst consisting of a specific protein (that is to say, an enzyme).

In the preferred embodiment of this invention, in particular, a metabolic path with two or more steps is activated, involving a chemical reaction, with the intervention of an enzyme, which catalyses the transformation of a pollutant into a first by-product. Said first by-product is in turn transformed into a second by-product, thanks to a subsequent enzyme, with a further chemical reaction. The metabolic path continues with similar successive chemical reactions, until the pollutant has been partly or completely mineralised and therefore transformed into non-polluting by-products.

Both the alcohols and the carboxylic acids, formed during the chemical reactions, are secreted by the micro-organism cell. They are then broken down into carbon dioxide and water either in the same process or in a subsequent biological treatment and are in turn used as surfactants to improve the dispersion of the pollutants in the water.

After the stirring step, the process for reducing the levels of contamination of soils polluted by DDT, DDE, DDD and/or their isomers according to this invention comprises a step of separating the solid - liquid mass.

Said step of separating the solid - liquid mass consists of separating the solid - liquid mass into a residual aqueous suspension and into a solid part. Said solid part contains a reduced quantity of pollutant. Said separating step is preferably carried out using a hydrocyclone and/or a further filtration in a filter press or a centrifuge. Alternatively, said separation is carried out using any other system suitable for the purpose. According to a preferred embodiment said separating step comprises two further operating steps. A first step of sieving the solid - liquid mass, so as to divide it into the solid part and into a second aqueous suspension. Sieving is carried out so that the solid part comprises the soil with a particle size measurement greater than 500 microns (obviously, if preliminary sieving was performed at the start of the process, the solid part will have a particle size measurement of between 500 microns and the predetermined threshold value).

This is followed by a second step of filtering the second aqueous suspension to obtain the residual aqueous suspension.

Preferably, the treated soil from filtration, preferably containing 15 - 20% of water with the part of enzymes which did not deteriorate during the process, is mixed with the treated soil with particle size measurement between 500 microns and the predetermined threshold value, from the step of sieving the solid - liquid mass (containing 15 - 20% of water with its enzymes which have not deteriorated), obtaining the solid part consisting of a wet treated soil.

According to a preferred embodiment of the invention said wet treated soil may be further subjected to a reduction in the levels of contamination in a natural way for additional months. Preferably for another 1 - 2 months. This gives a further reduction of around 50 - 70% of the pollutant.

The further reduction is made possible by the presence of air incorporated in the mixing operations, of humidity, of micro-organisms and of enzymes present in the wet treated soil which allow continuation of the microbial biodegradation of any residual contaminant in the soil.

The process for reducing the levels of contamination of soils polluted by DDT, DDE, DDD and/or their isomers according to this invention comprises, after the step of separating the solid part from the residual aqueous suspension, a step in which the solid part is stored and, if necessary, united and mixed with the part of the recovered soil having a particle size measurement greater than the predetermined threshold value.

Said recovered soil having a particle size measurement greater than the predetermined threshold value is the soil stored during the sieving step. The process for reducing the levels of contamination according to this invention may comprise various subsequent operating steps.

According to a preferred embodiment, the process may comprise the operating step of adding fresh enzymes to the residual aqueous suspension, then using this aqueous solution to which fresh enzymes have been added as the first aqueous solution. Therefore, said aqueous solution to which fresh enzymes have been added is used and mixed in the reactor with the polluted soil, during a new operating step of adding the first aqueous solution to the polluted soil.

According to a further preferred embodiment, the process may comprise the step of sending the residual aqueous solution for a biological treatment and, therefore, the first aqueous solution is completely replaced. Advantageously, the process may alternatively comprise partial use of both of the preceding solutions. In particular, in the preferred embodiment, part of the residual aqueous suspension has fresh enzymes added to it and is used as the first aqueous solution, and part is sent for biological treatment and substituted with a fresh solution. During the biological treatment metabolism continues of the products formed during the treatment and dissolved or dispersed in the aqueous solution.

The process for reducing the levels of contamination of soils polluted by DDT, DDE, DDD and/or their isomers according to this invention may be carried out either on site (that is to say, close to the site to be decontaminated, thus avoiding the need to transport the polluted soil far from it), or by transporting the polluted soil to plants located at other sites (that is to say, off site).

Moreover, said process is preferably performed at ambient temperature. In particular, if the process is carried out on the spot, the temperature depends on the time of year and the area in which the soil is located. However, the process may also be carried out at temperatures above the ambient temperatures, by introducing a heating fluid into the reactor jacket. The temperature at which the process is carried out is advantageously between 30 and 40°C, preferably between 36 and 37°C, more preferably equal to 36.5°C.

The process for reducing the levels of contamination of soils polluted by DDT, DDE, DDD and/or their isomers according to this invention causes a minimum reduction of at least 35% of the concentration of pollutants in the polluted soil.

The process for reducing the levels of contamination according to this invention may be carried out using suitable plants in two ways:
as an intermittent process or as a continuous process.

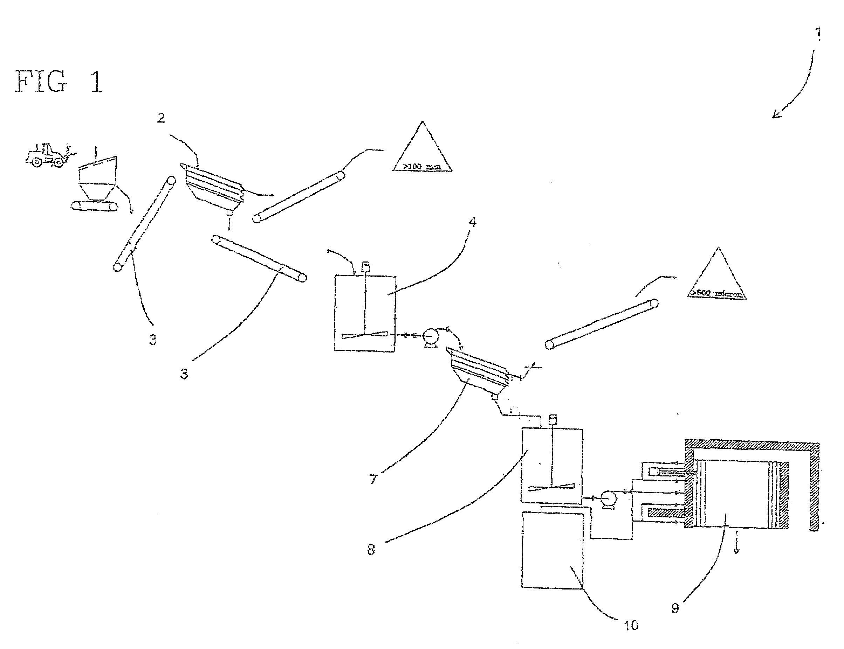

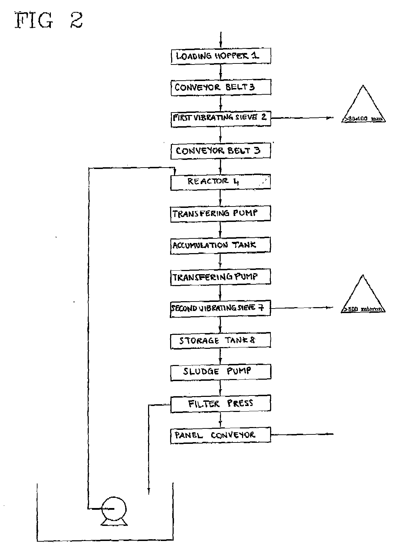

The intermittent process is advantageously carried out with a plant as illustrated in Figures 1 and 2.

Such a plant consists of a system for loading the polluted soil, preferably a loading hopper 1 which at the start eliminates the soil with a very high particle size measurement. Said soil with a high particle size measurement may damage the downstream apparatuses.

Then the soil is transported to a preliminary wet sieving system. Its purpose is to separate the soil with particle size measurement greater than the predetermined threshold value from the soil with a particle size measurement less than said value.

This sieving is preferably carried out using a first vibrating sieve 2.

The soil is preferably moved between the various operating steps of the process by conveyor belts 3.

The soil with a particle size measurement greater than the predetermined threshold value is not treated and is therefore transported out of the plant. In contrast, the soil with a particle size measurement which is less than the predetermined threshold value is sent to a reactor 4, preferably vertical, more preferably having an inner impeller and deflectors on the walls.

As well as the polluted soil, the first aqueous solution containing the enzymes is also put into the reactor 4. The solid - liquid mass obtained is then stirred for a predetermined time, as described above.

Once the stirring step is complete, the solid - liquid mass is transferred to a system for separating the solid part from the residual aqueous suspension. The solid - liquid mass is preferably transported to a second vibrating sieve 7.

During said sieving, the soil with a particle size measurement greater than 500 microns is separated from the second aqueous suspension. Said soil may be considered decontaminated (and, that is to say, having a pollutant concentration which is zero or less than a predetermined limit) and is therefore transported out of the plant. In contrast, the second aqueous suspension is preferably sent to a storage tank 8. Then it is preferably filtered using a filter press 9, to obtain the residual aqueous suspension. Alternatively to sieving and filtering, to separate the solid part from the liquid part other methods may be used, for example sedimentation.

The residual aqueous suspension has a fresh enzymes solution added to it and is recycled. Alternatively, the residual aqueous suspension is substituted with a fresh solution and sent for biological treatment 10.

The plant for implementing the continuous process for reducing the levels of contamination of soils polluted by DDT, DDE, DDD and/or their isomers according to this invention has a structure practically identical to that of the plant for the intermittent process.

The only operating step which differs is the step of mixing and stirring the solid - liquid mass.

In fact, the polluted soil with a particle size measurement that is less than the predetermined threshold value which preferably comes out of the first vibrating sieve 2 is sent, together with the first aqueous solution to a reactor 4, which is preferably horizontal. The reactor 4 has an inner impeller which conveys the polluted soil against the flow of the first aqueous solution. Therefore, the polluted soil is preferably inserted through a first infeed of the reactor 4, whilst the first aqueous solution is fed from a second infeed, positioned on the opposite side to the first infeed.

All of the other operating steps of the continuous process plant are identical to those of the intermittent process plant.

All of the apparatuses forming the plants described above (intermittent and continuous) may be designed so that they can be transported, allowing decontamination to be carried out on the spot.

For example, a test carried out in the field is described below.

A representative sample of polluted soil was taken from the site to be decontaminated. Said soil has a volume measurement estimated at 650,000 m3 and is polluted by DDT, DDE and DDD and their isomers. During the 1940s - 1960s a DDT production plant operated on the contaminated soil and the soil was contaminated by DDT, DDE, DDD and their isomers with average levels of 2500 ppm.

The soil was treated with a prototype plant for reducing the levels of contamination of soils polluted by DDT, DDE, DDD and/or their isomers with an intermittent process. Said plant consists of a reactor with an inner impeller, a wet sieve and a filtering system.

The capacity of the prototype plant was 100 kg/h of soil to be treated. The contaminated soil was initially dry sieved to separate the fraction with a particle size measurement greater than 2 mm (selected as the predetermined threshold value and representing 10 - 15% of the total). The fraction of contaminated soil with a particle size measurement of less than 2 mm was loaded in the reactor in a quantity of 100 kg per load.

A first aqueous solution was then added to the reactor. The solution comprised water, enzymes (obtained from pancreatin, Bacillus licheniformis, Bacillus subtilis, Thermomyces lanuginosus and Aspergillus Oryzae) and a pH correction agent to bring the pH to a value of 3.7 ±0.5 which is optimum for enzymatic action. The quantity (by weight) of water was equal to the quantity of soil treated. The quantity (by weight) of enzymes was equal to 1.5% by weight of the quantity of water.

The solid - liquid mass was then stirred for a period of around 6 hours at an ambient temperature generally between 15 and 30 °C.

The solid - liquid mass was then unloaded from the reactor and sent to the sieve which separated out the treated soil. Said separated soil had the following properties: concentration of DDT, DDE, DDD and their isomers reduced by 38.7%, and a moisture content of 25%.

The residual aqueous suspension was analysed and only non-hazardous wastes were found (classed as 161002 in the list of hazardous wastes contained in the annex to the amended decision of the European Commission 2000/532/EC).

Therefore, the process for reducing the levels of contamination of soils polluted by DDT, DDE, DDD and/or their isomers according to this invention fulfils the preset aims.

In fact, it: does not require the use of aggressive synthetic chemicals, which are themselves dangerous for the environment, it does not produce polluting waste, it can be carried out directly on the spot, it has a relatively short duration and provides optimum reduction of the levels of contamination.

Finally, it should be noticed that this invention is reliable and that even the cost linked to implementing the invention is relatively low.

## Claims

1. A process for reducing the levels of contamination of soils polluted by a pollutant amongst DDT, DDE, DDD and/or their isomers, comprising the steps of:
(i) excavating a soil polluted by at least one pollutant amongst DDT, DDE, DDD and/or their isomers (excavation step);
(ii) sieving said excavated polluted soil to separate out a first part with particle size measurement less than a predetermined threshold value, from a second part with particle size measurement greater than said predetermined threshold value, the predetermined threshold value being less than or equal to 100 mm (sieving step);
(iii) adding to a predetermined quantity of the first part of sieved polluted soil, preferably in a reactor, a first aqueous solution containing one or more enzymes in such a way as to obtain a solid - liquid mass;
(iv) stirring the solid - liquid mass for a predetermined time so that said one or more enzymes catalyse the partial or total degradation of said at least one pollutant by means of the micro-organisms present in the polluted soil (stirring step);
(v) separating the solid - liquid mass into a residual aqueous suspension and into a solid part (separation step).

2. The process according to claim 1, wherein said threshold value is less than or equal to 30 mm, preferably less than or equal to 10 mm, more preferably less than or equal to 4 mm, even more preferably less than or equal to 2 mm.

3. The process according to claim 1 or 2, wherein said first aqueous suspension further comprises a pH correction agent, preferably a weak acid, preferably acetic acid.

4. The process according to any one of claims 1 to 3, wherein said first aqueous suspension has a pH which various from 3 to 6.

5. The process according to any one of claims 1 to 4, wherein said one or more enzymes comprise:
at least one enzyme derived from at least one bacteria selected amongst:
at least one bacteria of the Bacilli family, preferably Bacillus licheniformis and/or Bacillus subtilis, and at least one Pseudomonas bacteria;
and/or at least one enzyme derived from at least one fungus selected amongst: at least one fungus of the Thermomyces family, preferably Thermomyces lanuginosus, and Aspergillus Oryzae;
and/or at least one enzyme derived from pancreatin;
and/or combinations of them.

6. The process according to any one of claims 1 to 5, wherein said one or more enzymes are selected amongst: hydrolase, protease, lipase, amylase, cellulase, lactase, laccase, carboxylase, catalase and phospholipase.

7. The process according to any one of claims 1 to 5, wherein the ratio of sieved polluted soil to said first aqueous solution is between 1:1 and 1:2.

8. The process according to any one of claims 1 to 7, wherein said first aqueous solution contains a quantity of enzymes which varies preferably from 1 to 5%, preferably from 1 to 2% relative to the weight of the soil.

9. The process according to any one of claims 1 to 8, wherein said stirring step is carried out for a time which may vary from 3 to 12 hours, preferably from 4 to 8 hours, more preferably from 5 to 7 hours.

10. The process according to claim 9, wherein said stirring step is carried out for at least 6 hours, preferably for 6 hours.

11. The process according to any one of claims 1 to 10, wherein said stirring step is carried out at ambient temperature, preferably at a temperature varying between 15 and 30°C.

12. The process according to any one of claims 1 to 11, wherein said separating step is carried out using a hydrocyclone and/or a filtration in a filter press or a centrifuge.

13. The process according to any one of claims 1 to 12, wherein said excavation step further comprises a step of homogenisation of the polluted soil, said soil homogenisation step preferably being carried out by mixing the soil.

14. The process according to any one of claims 1 to 13, further comprising a step of reducing the particle size measurement of the polluted soil.

15. The process according to claim 14, wherein said step of reducing the particle size measurement is carried out by grinding the polluted soil.

16. The process according to any one of claims 1 to 15, wherein said separation step further comprises a step of sieving the solid - liquid mass, in such a way as to obtain a solid part and a second aqueous suspension; and/or a step of filtering the second aqueous suspension in such a way as to obtain said residual aqueous suspension.

17. The process according to claim 16, wherein said solid part comprises the soil with a particle size measurement greater than 500 microns.
